# FASCICULE DE BREVET EUROPEEN

(11) **EP 2 760 319 B1**
(45) Date de publication et mention de la délivrance du brevet: **18.02.2015**
(21) Numéro de dépôt: 12715194.2
(22) Date de dépôt: 29.03.2012
(51) Int. Cl.: A47J 31/06, A47J 31/44

(54) **GROUPE D'INJECTION A DISPOSITIF DE SUSPENSION ELASTIQUE POUR LE SUPPORT PORTE-COUPE D'UNE MACHINE A CAFE DU TYPE DIT "EXPRESSO".**
EINSPRITZEINHEIT MIT ELASTISCHER AUFHÄNGUNGSVORRICHTUNG FÜR DEN BRÜHGRUPPENKOPF EINER SOGENANNTEN ESPRESSOMASCHINE
INJECTION UNIT HAVING A RESILIENT SUSPENSION DEVICE FOR THE GROUP HEAD OF AN SO-CALLED ESPRESSO COFFEE MACHINE

(30) Priorité: 18.04.2011 FR 1153351
(43) Date de publication de la demande: 06.08.2014
(73) Titulaire: Reneka International, 67560 Rosheim (FR)
(72) Inventeur: RUHL, Christian, F-67200 Oberschaeffolsheim (FR)
(74) Mandataire: Merckling, Norbert
(86) Numéro de dépôt international: PCT/IB2012/051528
(87) Numéro de publication internationale: WO 2012/143806

(56) Documents cités:
- EP-A1- 0 496 688
- EP-A1- 1 034 729
- WO-A1-96/27316
- WO-A1-2006/127118

## Description

La présente invention se rapporte à un poste de percolation pour une machine de préparation de café du type expresso. Selon la particularité de ce poste de percolation, la pièce servant de support à la coupe qui est appelée classiquement porte-coupe est montée par un dispositif à suspension élastique sur le bloc mécanique du groupe d'injection de ce poste de percolation du café.

Les machines à café du type expresso comportent une ou plusieurs coupes ou porte-filtres formant un logement pour un réceptacle appelé passoire contenant la mouture du café et prolongées chacune par un bec verseur simple ou double. Ces coupes présentent toutes une extension latérale en forme de poignée. Le document EP-0496688 décrit une telle machine.

Ces coupes ou porte-filtres sont montés en sous face sur un ensemble mécanique dénommé groupe d'injection qui comprend un bloc mécanique fixe dont la partie inférieure présente une cavité dans la partie centrale du fond de laquelle émerge un diffuseur d'où est éjectée sur la mouture l'eau chaude sous pression. Ces coupes comportent classiquement deux ergots qui coopèrent avec deux gorges obliques ou hélicoïdales conformées dans la surface latérale interne de la pièce inférieure appelée porte-coupe du groupe d'injection.

Une machine peut comporter plusieurs groupes d'injection permettant pour chacun d'entre eux, de préparer une ou deux tasses de café à partir d'une seule dose de mouture.

Le montage de chaque coupe sur la partie inférieure du groupe d'injection s'effectue par un mouvement de pivotement par exemple d'un quart de tour au cours duquel les surfaces supérieures de la passoire et du volume de mouture se rapprochent de la face extérieure du diffuseur et du joint qui l'entoure jusqu'à contact d'étanchéité entre le bord extérieur supérieur de la passoire et la face inférieure plane de ce joint entourant le diffuseur.

La dernière partie de la course de pivotement de la coupe détermine le serrage de la passoire contre ce joint. Cette fin de course demande plus ou moins d'effort en fonction du niveau de remplissage de la passoire en mouture.

Si le degré de serrage n'influe pratiquement pas sur la qualité du café, on rencontre l'inconvénient selon lequel, pour obtenir l'étanchéité nécessaire, il faut procéder à un effort de serrage suffisant qui se traduit par un mouvement de friction du bord supérieur de la passoire sur la face inférieure extérieure du joint qui s'use et se déforme à l'usage. Ceci de telle façon que l'on arrive progressivement à augmenter la course finale de pivotement du porte-filtre.

Cet allongement de la course en pivotement impose un rattrapage de réglage pour éviter qu'en position finale les poignées de deux porte-filtre adjacents se rapprochent au point d'interférer et de rendre leur manipulation malaisée.

Il faut alors changer le joint et procéder à un nouveau réglage.

Le but de la présente invention est une meilleure facilité d'enclenchement et ceci sans forcer par un geste sécurisant qui garantit d'emblée l'étanchéité et n'apporte aucune variation de la position finale de la poignée tout en permettant une variabilité de la dose de café, c'est-à-dire une variation en volume de la mouture.

Pour résoudre ce problème technique le groupe d'injection pour machine à café du type expresso selon l'invention comprend un bloc mécanique supérieur fixe présentant une saillie centrale formant un diffuseur d'eau chaude et sur lequel est fixée une pièce amovible dite porte-coupe dont la surface intérieure présente une cavité dans laquelle est montée une coupe comportant une poignée de manoeuvre et un logement de réception pour une passoire contenant la mouture de café pour la préparation du café du type expresso. Selon cette l'invention, la passoire porte à étanchéité sur un joint entourant la saillie centrale et ce groupe d'injection est caractérisé en ce que :
- le porte-coupe est fixé sur le bloc mécanique supérieur fixe du groupe d'injection par un dispositif de liaison à effet élastique apportant un débattement en écartement du porte-coupe par rapport au bloc mécanique supérieur fixe,
- le joint d'étanchéité entourant le diffuseur porte sur la périphérie intérieure supérieure de la passoire en vue d'une étanchéité glissante dynamique.

Dès lors, tout réglage ou remplacement du joint devient inutile car il n'est plus sollicité en friction et sa durée de vie augmente sensiblement.

Par ailleurs, peu importe la compression de la mouture. Tout dépassement possible en hauteur de la mouture dans une utilisation habituelle est automatiquement absorbé.

De plus, le porte-coupe est facilement démontable du bloc mécanique du groupe d'injection. La liaison à effet élastique du porte-coupe réduit l'entretien et apporte une grande facilité et un confort certain d'utilisation pour le personnel travaillant avec la machine.

D'autres caractéristiques et avantages de l'invention apparaîtront dans la description qui suit, donnée à titre d'exemple et accompagnée des dessins dans lesquels :
- la figure 1 est une vue en perspective en éclaté du groupe d'injection et de l'ensemble coupe-passoire montrant les principales caractéristiques de l'invention ;
- les figures 2 et 3 et ensuite 4 et 5 sont des vues à chaque fois respectivement en élévation et en coupe longitudinale du poste de percolation selon l'invention d'une part en position haute et d'autre part en position basse du porte-coupe correspondant à deux cas différents de hauteur de mouture, le premier plus faible pour les figures 2 et 3 et le second plus important pour les figures 4 et 5 montrant un débattement « d » en écartement du porte-coupe par rapport à la sous face du bloc mécanique fixe du groupe d'injection ;
- la figure 6 est une vue de détail du dispositif d'assemblage montrant la vis et son ressort d'écartement correspondant à la partie encerclée de la figure 3 ;
- la figure 7 est une vue de détail en coupe au niveau du joint montrant la position du rebord de la passoire par rapport au joint correspondant à la partie encerclée de la figure 5,
- la figure 8 est une vue en perspective du joint et de sa garniture,
- la figure 9 est une vue mixte en perspective et en coupe du joint d'étanchéité selon la ligne IX-IX de la figure 8,
- la figure 10 est une vue en perspective éclatée de l'ensemble formé de la coupe, de la passoire, du joint et de la tête du diffuseur.

La présente invention concerne de façon générale un poste de percolation du café dans une machine de préparation du café de type dit « expresso ».

Classiquement, un poste de percolation comprend un groupe d'injection 1 sur lequel viennent se rapporter divers éléments et composants amovibles pour la recharge en mouture représentant une dose de café en poudre comme on le verra ci-après.

L'ensemble mécanique du groupe d'injection 1 se compose d'un bloc mécanique supérieur fixe 2 présentant un conduit d'injection 3 et une saillie cylindrique centrale 4 en partie centrale inférieure, par exemple en plot, protégée par un filtre de diffusion 5 sous la forme d'un disque perforé formant la face de sortie de la tête 6 d'un diffuseur 7 d'eau chaude sous pression. Le bloc mécanique supérieur fixe 2 du groupe d'injection 1 sert de support à une pièce amovible de support appelée porte-coupe 8 qui se trouve assemblée à ce bloc mécanique supérieur fixe 2 par des moyens de fixation qui selon l'invention présentent un effet élastique.

Sur le porte-coupe 8 vient se monter une coupe 9 ou porte-filtre présentant une poignée de manoeuvre 10 et portant une passoire 11 à rebord périphérique supérieur 12 contenant la mouture 13 du café.

La coupe 9 présente, conformés en saillie dans sa surface latérale extérieure ou rapportés sur celle-ci, trois ergots de maintien 14, 15 et 16 coopérant avec trois gorges correspondantes 17, 18 et 19 en rampes obliques ou hélicoïdales chacune à encoche d'entrée telle que 20 conformées dans la surface latérale intérieure du porte-coupe 8 par lesquelles la coupe 9 vient se monter sur le porte-coupe après pénétration de chaque ergot de maintien 14, 15 et 16 dans une encoche d'entrée correspondante 20 suivie d'un mouvement de pivotement jusqu'à un front droit ou oblique de butée tel que 21 marquant la fin mécanique de chaque gorge.

Le porte-coupe 8 est un corps de forme générale annulaire présentant un espace central libre 22 occupé par la tête 6 du diffuseur 7 lorsque le porte-coupe est monté sur le bloc mécanique supérieur fixe 2.

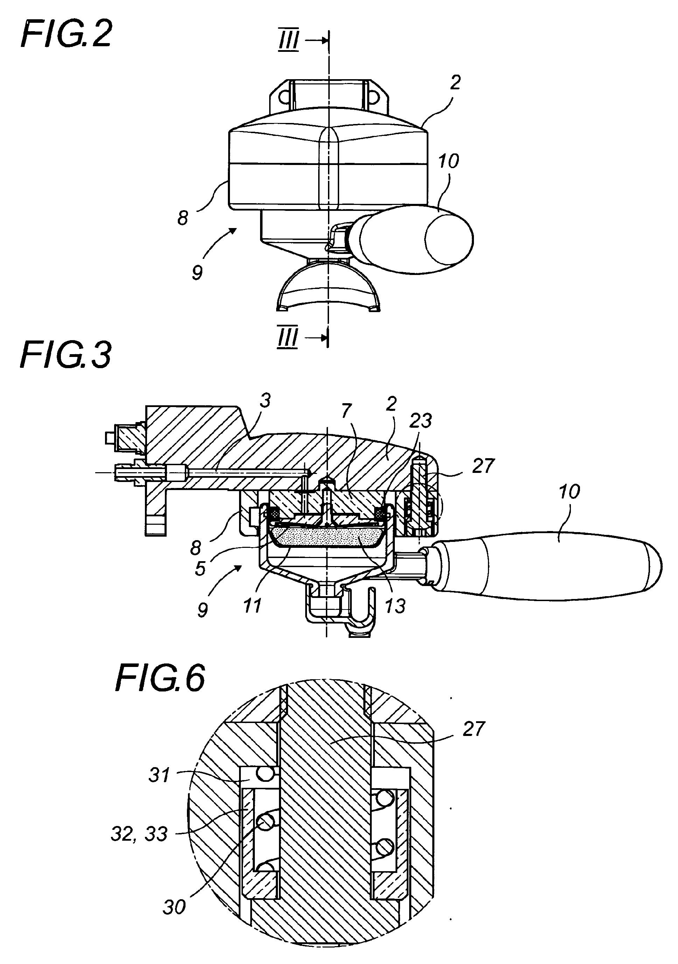

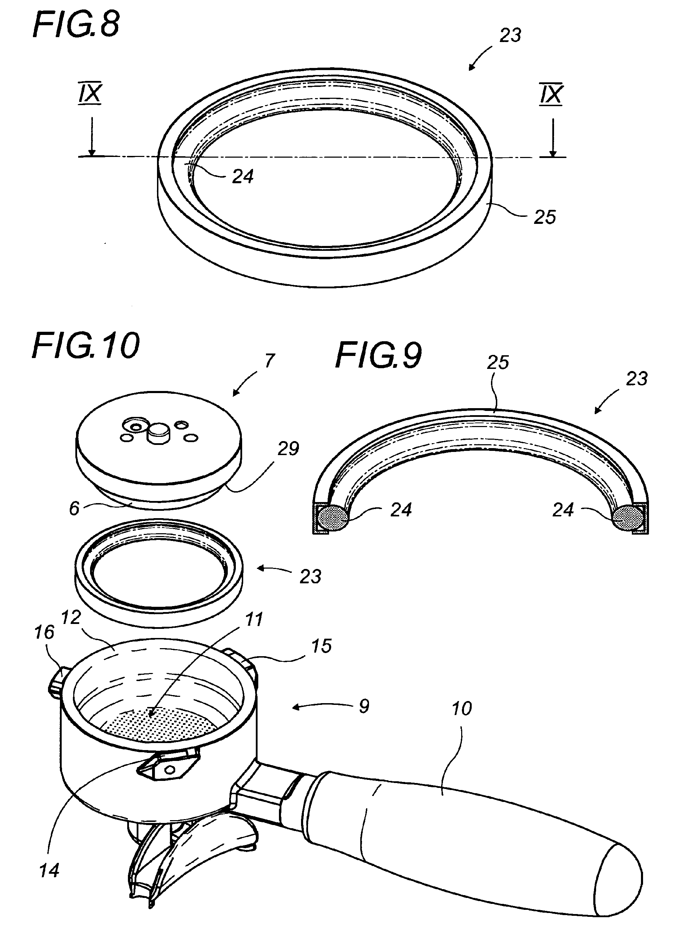

Le groupe d'injection 1 présente aussi en tant que composant rapporté, un joint d'étanchéité 23 particulier placé autour de la saillie centrale 4 formant le corps du diffuseur 7, comme le montre les figures 3, 5 et 10. Ce joint 23 est composite, formé d'un joint torique 24 logé dans, et maintenu par, une garniture annulaire 25 en matière souple mais plus dure que celle du joint comme représenté sur les figures 8 et 9. Cette garniture annulaire 25 lui sert de logement et de protection. Elle est ouverte sur la totalité de sa face latérale interne.

Ce joint porte sur la surface latérale périphérique intérieure supérieure de la passoire 11.

Le porte-coupe 9 est monté sur le bloc mécanique supérieur fixe 2 du groupe d'injection 1 par l'intermédiaire d'un moyen ou d'un dispositif de liaison à effet élastique, par exemple comme celui représenté sur les figures, formé de plusieurs vis de montage par exemple trois vis 26, 27 et 28 avec effet de ressort pour absorber les variations de hauteur de la mouture 13. On peut ainsi tolérer des variations de 1 à 3 grammes correspondant à celles rencontrées entre les différentes doses dans une utilisation courante provenant de la dispersion du moulin à café.

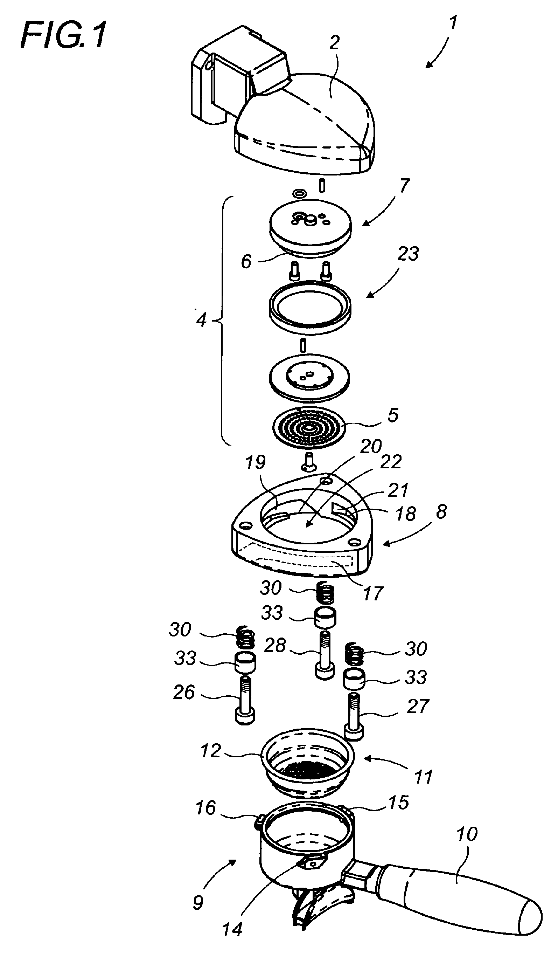

Comme visible sur les figures 1, 3 et 5, chaque vis de montage 26, 27 et 28 apporte une latitude de travail ou d'adaptation par son dispositif coulissant à effet élastique autorisant un débattement longitudinal d'adaptation « d » aux variations possibles de hauteurs de la mouture 13 par déplacement du porte-coupe 9.

Le mouvement de pivotement est limité par les fronts droits ou obliques de fin de course tels que 21 marquant la limite mécanique de chaque gorge 17, 18 et 19. Chaque front 21 constitue une butée d'arrêt pour chaque ergot de maintien 14, 15 et 16 correspondant de la coupe 9.

On peut noter ici, qu'il n'est nullement besoin de forcer en serrage puisque la fixation à effet élastique du porte-coupe 8 sur le bloc mécanique supérieur fixe 2 permet de compenser partiellement l'effort de serrage en vue d'obtenir l'étanchéité et que la position de fin de course est bien délimitée par les butées de fin de gorge et ceci indépendamment de la quantité de mouture 13 présente dans la passoire 11.

L'étanchéité est garantie par le joint composite 23 décrit ci-dessus sur le contour extérieur duquel vient porter la zone supérieure de la face intérieure de la paroi latérale de la passoire 11 délimitée par son rebord périphérique 12 lors du mouvement de pivotement de la poignée.

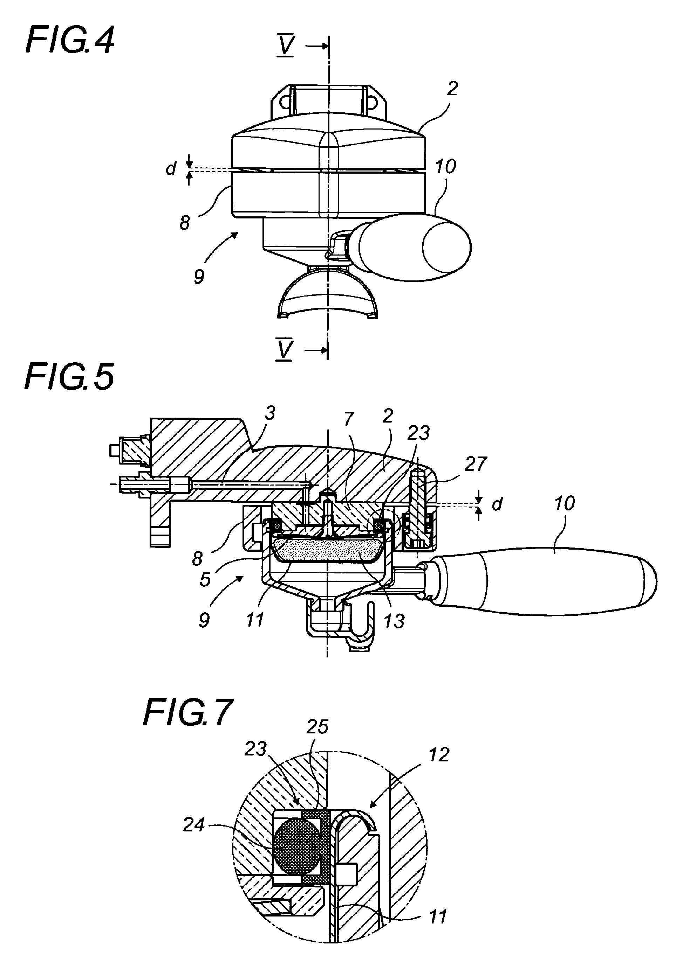

Comme déjà indiqué, ce dispositif de joint composite 23 peut par exemple se présenter sous la forme d'une garniture annulaire 25 à surface latérale intérieure ouverte servant de logement à un joint torique 24 comme visible sur les figures 3 et 5.

La garniture annulaire 25 est appliquée contre la surface latérale extérieure de la tête 6 du diffuseur 7 ou se monter dans un épaulement périphérique tel que 29 ou dans une gorge entourant celle-ci.

Les divers avantages liés à l'invention proviennent de la particularité du joint composite 23 et de son montage, mais aussi du système de suspension élastique par lequel est monté le porte-coupe 8 sur le bloc mécanique supérieur fixe 2 du groupe d'injection 1.

On décrira maintenant ci-après, en référence aux figures 1, 3, 5 et 6, un exemple de réalisation d'une liaison de montage avec effet élastique permettant un débattement d'écartement référencé «d» du porte-coupe 8 par rapport au bloc mécanique supérieur fixe 2 du groupe d'injection 1. Ce débattement en écartement « d » est suffisant pour absorber automatiquement les écarts habituels de volume et donc de hauteur de la monture 13 dans la passoire 11 tout en gardant l'étanchéité nécessaire au bon fonctionnement de la production de café du type dit « expresso ».

Le porte-coupe 8, qui est la pièce amovible de support, est assemblé par l'intermédiaire d'au moins trois vis 26, 27 et 28 au bloc mécanique supérieur fixe 2 du groupe d'injection 1 comme visible sur les figures 1,3 et 5.

Sur l'extrémité de chacune de ces vis 26, 27 et 28 a été enfilé un ressort hélicoïdal tel que 30 prenant chacun appui dans le fond d'un logement tel que 31 prévu dans le corps du porte-coupe 8 dans lequel pénètre chaque ressort 30 correspondant. Chaque tête de chaque vis 26, 27 et 28 reste au niveau de la sous face du porte-coupe 8. Elles sont, par exemple, creuses à évidement hexagonal. Les ressorts 30 procurent un débattement élastique en écartement du porte-coupe 8 par rapport au bloc mécanique supérieur fixe 2 du groupe d'injection 1 de la distance « d » pouvant correspondre à la différence de longueur entre un état partiellement comprimé et un état presque totalement comprimé de chaque ressort 30 suite au mouvement de descente du porte-coupe 8 réalisant l'adaptation en hauteur de la mouture tout en garantissant l'étanchéité.

Pour limiter cette distance, on introduit une butée 32, par exemple sous la forme d'une douille 33 montée autour de chaque ressort d'écartement 30 et s'appuyant sur la sous face de la tête de chaque vis 26, 27 et 28. La douille 33 fait office de butée en limitant la course du porte-coupe 8 par appui de son chant frontal contre le fond du logement 31.

Ce mouvement lié à l'effet de ressort est utilisé pour compenser automatiquement les différences de hauteur de la monture 13. Celui-ci est limité par la butée 32 du chant frontal de la douille 33 contre le fond du logement 31.

On a créé ainsi une suspension élastique du porte-coupe 8 sur le bloc mécanique supérieur fixe 2 du groupe d'injection 1 qui apporte une adaptation automatique aux variations de volume de la dose de mouture tout en garantissant l'étanchéité et en gardant une position identique de la poignée 10.

## Revendications

1. Groupe d'injection (1) pour machine à café du type expresso comprenant un bloc mécanique supérieur fixe (2) présentant une saillie centrale (4) formant un diffuseur d'eau chaude et sur lequel est fixée une pièce amovible dite porte-coupe (8) dont la surface intérieure présente une cavité (22) dans laquelle est montée une coupe (9) comportant une poignée de manoeuvre (10) et un logement de réception pour une passoire (11) contenant la mouture de café (13) pour la préparation du café du type dit « expresso », la coupe (9) étant montée sur le porte-coupe (8) par la coopération d'ergots dans des gorges lors d'un mouvement de pivotement, la passoire (11) portant à étanchéité sur un joint entourant la saillie centrale (4) le joint d'étanchéité (23) entourant le diffuseur (7) venant porter sur la périphérie intérieure supérieure de la passoire (11) réalisant ainsi l'étanchéité lors du mouvement de pivotement de la poignée de manoeuvre (10) , **caractérisé en ce que** :
• le porte-coupe (8) est fixé sur le bloc mécanique supérieur fixe (2) du groupe d'injection (1) par un dispositif de liaison à effet élastique apportant un débattement en écartement du porte-coupe (8) par rapport au bloc mécanique supérieur fixe (2).

2. Groupe d'injection (1) selon la revendication 1, **caractérisé en ce que** le dispositif de liaison à effet élastique se compose d'au moins trois vis (26, 27, 28) traversant le porte-coupe (8) et étant vissées dans le bloc mécanique supérieur fixe (2) en regard et **en ce que** les vis (26, 27, 28) sont pourvues chacune d'un ressort (30) se comprimant par le mouvement de descente du porte-coupe (8).

3. Groupe d'injection (1) selon la revendication 2, **caractérisé en ce que** le mouvement de descente du porte-coupe (8) est limité par une butée (32).

4. Groupe d'injection (1) selon la revendication 3, **caractérisé en ce que** la butée (32) est une douille (33) montée coaxiale sur chaque vis (26, 27, 28) entre le ressort (30) et la tête de vis.

5. Groupe d'injection (1) selon la revendication 1, **caractérisé en ce que** le joint composite (23) se présente sous la forme d'une garniture annulaire (25) à surface latérale intérieure ouverte servant de logement à un joint torique (24).

## Patentansprüche

1. Einspritzgruppe (1) für Kaffeemaschine vom Typ Espresso, umfassend einen oberen, festen, mechanischen Block (2), der einen zentralen Vorsprung (4) aufweist und einen Warmwasserspender bildet und auf dem ein abnehmbares Teil, bezeichnet als Schalenhalter (8), befestigt ist, auf dem die interne Fläche eine Ausnehmung (22) aufweist, in der eine Schale (9) mit einem Betätigungsgriff (10) und einer Aufnahme für ein Sieb (11) befestigt ist, das das Kaffeepulver (13) für die Zubereitung des Kaffees vom so genannten Typ "Espresso" enthält, wobei die Schale (9) auf dem Schalenhalter (8) durch die Kooperation von Nocken in Auskehlungen bei einer Schwingbewegung montiert ist, wobei das Sieb (11) auf einem den zentralen Vorsprung (4) umgebenden Dichtring zur Abdichtung beiträgt, wobei der Dichtring (23) die Ausgabe (7) umringt, die sich auf den oberen internen Umfang des Siebs (11) bezieht, das somit die Abdichtung bei der Schwenkbewegung des Betätigungsgriffs (10) realisiert, **dadurch gekennzeichnet, dass**:
- der Schalenhalter (8) auf dem oberen, festen, mechanischen Block (2) der Einspritzgruppe (1) durch eine Verbindungsvorrichtung mit elastischer Wirkung befestigt ist, die ein Ausschlagen bei einer Beabstandung des Schalenhalters (8) im Verhältnis zum oberen, festen, mechanischen Block (2) bewirkt.

2. Einspritzgruppe (1) gemäß Anspruch 1, **dadurch gekennzeichnet, dass** sich die Verbindungsvorrichtung mit elastischer Wirkung aus mindestens drei Schrauben (26, 27, 28) zusammensetzt, die den Schalenhalter (8) durchqueren und in den oberen, festen, mechanischen Block (2) gegenüber eingeschraubt sind und dass die Schrauben (26, 27, 28) jede mit einer Feder (30) versehen sind, die durch die Abwärtsbewegung des Schalenhalters (8) komprimiert wird.

3. Einspritzgruppe (1) gemäß Anspruch 2, **dadurch gekennzeichnet, dass** die Abwärtsbewegung des Schalenhalters (8) durch einen Anschlag (32) begrenzt ist.

4. Einspritzgruppe (1) gemäß Anspruch 3, **dadurch gekennzeichnet, dass** der Anschlag (32) eine Fassung (33) ist, die koaxial auf jeder Schraube (26, 27, 28) zwischen der Feder (30) und dem Schraubenkopf montiert ist.

5. Einspritzgruppe (1) gemäß Anspruch 1, **dadurch gekennzeichnet, dass** die Verbunddichtung (23) die Form einer ringförmigen Einfassung (25) mit offener, interner, lateraler Fläche aufweist, die als Aufnahme für einen O-Ring (24) dient.

## Claims

1. Injection unit (1) for an espresso coffee machine comprising a fixed upper mechanical block (2) with a central projection (4) that constitutes a hot water distributor, and on which a detachable part called a cup holder (8) is fixed; the inner surface of this part has a recess (22) in which a cup (9) is fitted, which has a handle (10) and a housing for a strainer (11) containing the ground coffee (13) that is used to prepare "espresso" coffee, with the cup (9) being fitted on the cup holder (8) via the interactive operation of lugs in grooves during a pivoting movement, the strainer (11) helping in sealing a gasket around the central projection (4) ; the sealing gasket (23) surrounding the distributor (7) is supported on the upper inner periphery of the strainer (11), thus ensuring the sealing during the pivoting movement of the operating handle (10) **characterised in that**:
- the cup holder (8) is fitted on the fixed upper mechanical block (2) of the injection unit (1) by a flexible connecting device providing a clearance between the cup holder (8) and the fixed upper mechanical block (2).

2. Injection unit (1) according to claim 1, **characterised in that** the flexible connecting device comprises at least three screws (26, 27, 28) extending through the cup holder (8) and being screwed facing into the fixed upper mechanical block (2) and such that the screws (26, 27, 28) are each provided with a spring (30) that is compressed by the downward movement of the cup holder (8).

3. Injection unit (1) according to claim 2, **characterised in that** the downward movement of the cup holder (8) is limited by a stop (32).

4. Injection unit (1) according to claim 3, **characterised in that** the stop (32) is a bushing (33) that is coaxially fixed on each screw (26, 27, 28) between the spring (30) and the screw head.

5. Injection unit (1) according to claim 1, **characterised in that** the composite seal (23) is in the form of an annular seal (25) with an open inner lateral surface used to house an O-ring (24).
